# EUROPÄISCHE PATENTANMELDUNG

(11) **EP 4 610 155 A1**
(43) Veröffentlichungstag der Anmeldung: **03.09.2025**
(21) Anmeldenummer: 25156435.7
(22) Anmeldetag: 07.02.2025
(51) Int. Cl.: B62J 50/21, B62K 19/40

(54) **ELEKTROMOTORISCH ANGETRIEBENES FAHRZEUGS MIT INTEGRIERTER ANZEIGEEINHEIT**

(30) Priorität: 01.03.2024 DE 102024201936
(71) Anmelder: Robert Bosch GmbH, 70442 Stuttgart (DE)
(72) Erfinder: Henzler, Simon, 72555 Metzingen (DE)

(57) **Zusammenfassung**

Die Erfindung betrifft ein elektromotorisch angetriebenes Fahrzeug (10), insbesondere elektromotorisch angetriebenes Ein- oder Zweirad (12), mit einem Rahmen (18), wobei in eine Oberfläche (40) des Rahmens (18) eine Anzeigeeinheit (36) zur Interaktion eines Fahrers mit dem elektromotorisch angetriebenen Fahrzeug (10) vorgesehen ist. Es wird vorgeschlagen, dass eine Oberfläche (38) der Anzeigeeinheit (36) derart bündig in die Oberfläche (40) des Rahmens (18) integriert ist, dass mittels einer zwischen der Anzeigeeinheit (36) und dem Rahmen (18) angeordneten Zwischenschicht (66) eine Ebene gebildet ist.

## Beschreibung

Die Erfindung betrifft ein elektromotorisch angetriebenes Fahrzeug, insbesondere ein elektromotorisch angetriebenes Ein- oder Zweirad, mit einem Rahmen sowie eine Anzeigeeinheit für ein elektromotorisch angetriebenes Fahrzeug nach der Gattung der unabhängigen Ansprüche.

### Stand der Technik

Es ist bekannt, in eine Oberfläche eines zwischen dem Lenker und dem Sattel angeordneten Oberrohrs des Rahmen eines elektromotorisch angetriebenen Zweirads eine Anzeigeeinheit mit einem Display zur Interaktion eines Fahrers mit dem Zweirad vorzusehen. Derartige Lösungen wurden beispielsweise bereits von Herstellern wie Brose oder Giant vorgestellt, bei denen die Anzeigeeinheit erhaben in das Oberrohr eingesetzt ist. Bei VanMoof ist das Display der Anzeigeeinheit zudem derart in ein transluzentes Oberrohr integriert, dass dessen Leuchtmittel durch das Oberrohr durchscheinen. Somit weist das Display jedoch nur eine sehr geringe Auflösung zur groben Statusanzeige vereinzelter Informationen auf.

Es ist Aufgabe der Erfindung, eine gegenüber dem Stand der Technik verbesserte Anzeigeeinheit im Rahmen eines elektromotorisch angetriebenen Fahrzeugs bereitzustellen, die weitestgehend unempfindlich gegenüber Bewegungen des Rahmens und gegenüber Witterungs- und anderen Umwelteinflüssen ist.

### Vorteile der Erfindung

Zur Lösung der Aufgabe ist vorgesehen, dass eine Oberfläche der Anzeigeeinheit derart bündig in die Oberfläche des Rahmens integriert ist, dass mittels einer zwischen der Anzeigeeinheit und dem Rahmen angeordneten Zwischenschicht eine Ebene gebildet ist. Aufgrund der bündigen Oberflächen von Anzeigeeinheit und Rahmen ist eine weitestgehende Unempfindlichkeit gegenüber Wasser, Staub und Schmutz gegeben. Unter bündig soll verstanden werden, dass die Oberflächen im Wesentlichen eine Ebene bilden, auf der sich kein Wasser, Staub oder Schmutz in etwaigen Unebenheiten, wie Vertiefungen, Spalte, Erhebungen oder dergleichen ansammeln kann. Es sei jedoch angemerkt, dass die die Ebene bildenden Oberflächen bei üblicher Nutzung durchaus selbst verschmutzen können, da sie nicht zwingend derart beschichtet sein müssen, dass sie wasser- oder schmutzabweisend sind. Unter einer Ebene soll in diesem Zusammenhang verstanden werden, dass die einzelnen Oberflächen nur einen minimalen Höhenversatz von weniger als 0,1 mm aufweisen.

Das elektromotorisch angetriebene Fahrzeug kann beispielsweise als ein Elektrofahrrad (z.B. EPAC - Electrically Power Assisted Cycle, e-Bike, Pedelec, e-Lastenfahrrad, etc.), ein Elektromotorrad, ein- oder zweirädriger e-Scooter, ein e-Mofa oder dergleichen, ausgebildet sein. Die Erfindung ist ebenso anwendbar auf andere Anwendungen im Bereich der Micro-Mobilitäts-Anwendungen wie z.B. e-kick-Scooter, Mono-wheels oder andere nicht typzugelassener Fahrzeuge mit fest oder austauschbar im Fahrzeug verbauten Akkupacks. Unter einem elektromotorisch angetriebenen Fahrzeug soll daher auch ein Fahrzeug verstanden werden, dass eine Antriebseinheit zur Unterstützung des Fahrers bzw. einen elektromotorischen Teilantrieb aufweist.

Die Energieversorgung des elektromotorisch angetriebenen Fahrzeugs erfolgt über eine Energiespeichereinheit, die entweder fest im Fahrzeug integriert ist oder als werkzeuglos lösbarer Wechselakkupack ausgebildet sein kann. Im Falle eines Wechselakkupacks kann zudem vorgesehen sein, dass dieser sowohl im mit dem elektromotorisch angetriebenen Fahrzeug verbundenen Zustand als auch im vom elektromotorisch angetriebenen Fahrzeug getrennten Zustand aufladbar ist. Die Batteriespannung der Energiespeichereinheit ist in der Regel ein Vielfaches der Spannung einer einzelnen Energiespeicherzelle der Energiespeichereinheit und ergibt sich aus der Verschaltung (parallel und/oder seriell) der einzelnen Energiespeicherzellen. Bevorzugt sind die Energiespeicherzellen als lithiumbasierte Energiespeicherzellen, z.B. Li-Ion, Li-Polymer, Li-Metall, Na-Ionen oder dergleichen, ausgebildet. Die Erfindung ist aber auch für Energiespeichereinheiten mit Ni-Cd-, Ni-MH-Zellen oder andere geeignete Zellenarten anwendbar. Bei gängigen Li-lon-Energiespeicherzellen mit einer Zellspannung von 3,6 V ergeben sich beispielhaft nominelle Batteriespannungen von 3,6 V, 18 V, 36 V, 54 V, etc. Die Erfindung ist jedoch nicht von der Art und Bauform der verwendeten Energiespeicherzellen und der Energiespeichereinheit abhängig, sondern kann auf beliebige elektrochemische Energiespeichereinheiten und Energiespeicherzellen, z.B. neben Rundzellen auch Pouchzellen oder dergleichen, mit Batteriespannungen von 36 V, 48 V, 52 V oder dergleichen angewendet werden.

Unter einer Anzeigeeinheit soll eine vom Rahmen des Fahrzeugs trennbare Baueinheit mit einem eigenen Gehäuse und einem Display, insbesondere einem Touchdisplay, zur Interaktion des Fahrers mit dem Fahrzeug verstanden werden. Dabei dient die Anzeigeeinheit unter anderem zur Information des Fahrers bezüglich diverser Zustände (z.B. Ladezustand der Energiespeichereinheit, Schaltzustand einer Gangschaltung, Zustand einer Fahrzeugbeleuchtung oder dergleichen). Die Anzeigeeinheit kann auch als ein Bordcomputer mit einem integrierten Prozessor und ggf. integrierten Sensoren zur Navigation, Luftdruckmessung, Temperaturmessung, Helligkeitsmessung oder dergleichen ausgebildet sein. In diesem Zusammenhang können einzelne Komponenten des Fahrzeugs über die Anzeigeeinheit, insbesondere über das Touchdisplay oder über separater Taster, direkt gesteuert werden.

In einer Weiterbildung ist vorgesehen, dass die Zwischenschicht stoffschlüssig mit einem Gehäuse der Anzeigeeinheit verbunden ist. Auf diese Weise ergibt sich eine besonders einfache Montage der Anzeigeeinheit in den Rahmen, da diese infolge der mit dem Gehäuse verbundenen Zwischenschicht bereits als ein vorgefertigtes Modul ausgebildet ist. Zu diesem Zweck weist die Anzeigeeinheit zumindest ein Befestigungsmittel, insbesondere eine Schraube oder eine Schraubenaufnahme und ein Toleranzausgleichelement, insbesondere eine Blattfeder, zur Befestigung im Rahmen auf. Ein als Touchdisplay ausgebildetes Display ermöglicht es dem Bediener auf sehr einfache Weise, aktiv mit dem elektromotorisch angetriebenen Fahrzeug per Fingersteuerung zu interagieren, um beispielsweise ein Schaltverhalten einer Gangschaltung, eine Beleuchtungssituation einer Beleuchtung des Fahrzeugs, eine Energiesteuerung für einen Acku des Fahrzeugs, eine Fahrzeugnavigation oder dergleichen zu beeinflussen.

Die Zwischenschicht besteht vorzugsweise aus einem elastischen Material, insbesondere einem thermoplastischen Elastomer oder Silikon. In diesem Zusammenhang kann die Zwischenschicht elastischer ausgebildet sein als das Gehäuse. Eine elastische Zwischenschicht vereinfacht die insbesondere bündige Integration der Anzeigeeinheit in den Rahmen, da dadurch etwaige Fertigungs- und Montagetoleranzen ausgeglichen werden können. Zudem lassen sich Relativbewegungen zwischen der Anzeigeeinheit und dem Rahmen kompensieren, die beispielsweise infolge von Verformungen des Rahmens bei Sprüngen, Stürzen oder starken Richtungsänderungen mit dem elektromotorisch angetriebenen Fahrzeug entstehen können.

Im montierten Zustand ist die Zwischenschicht der Anzeigeeinheit verformt, insbesondere gestaucht, ausgebildet, um einen möglichst dichten Sitz der Anzeigeeinheit im Rahmen zu gewährleisten. Um das Eindringen von Fluiden in den Rahmen beispielsweise während einer Reinigung des elektromotorisch angetriebenen Fahrzeugs oder bei einem Starkregen zu vermeiden, ist die Zwischenschicht als eine Dichtung zwischen dem Rahmen und der Anzeigeeinheit ausgebildet.

Es ist ferner eine Aufgabe der Erfindung, eine gegenüber dem Stand der Technik verbesserten Anzeigeeinheit im Rahmen eines elektromotorisch angetriebenen Fahrzeugs bereitzustellen, die einerseits eine Oberfläche bietet, die weitestgehend unempfindlich gegenüber Witterungs- und anderen Umwelteinflüssen ist und andererseits eine kabelgebundene Anschlussmöglichkeit für externe Geräte bietet.

Zur Lösung der Aufgabe ist vorgesehen, dass die Anzeigeeinheit eine Oberfläche mit einem Display, insbesondere einem Touchdisplay, und eine in die Oberfläche eingelassene Anschlussbuchse zur Daten- und/oder Energieübertragung aufweist, wobei die Oberfläche der Anzeigeeinheit bündig in die Oberfläche des Rahmens integriert ist und die Anschlussbuchse gegenüber den Oberflächen vertieft eingelassen ist. Aufgrund der bündigen Oberflächen ist das Display somit weitestgehend unempfindlich gegenüber Wasser, Staub und Schmutz, während die Anschlussbuchse zur Daten- und/oder Energieübertragung von oder zu externen Geräten, wie beispielswiese einem Smartphone oder dergleichen nutzbar ist.

In einer Weiterbildung ist vorgesehen, dass die Anschlussbuchse derart mit einer Abdeckkappe verschließbar ist, dass die Abdeckkappe bündig mit den Oberflächen abschließt. Somit ist auch die Anschlussbuchse selbst vor etwaigen Witterungs- und anderen Umwelteinflüssen geschützt.

Die Abdeckkappe kann aus einem starren Material, insbesondere einem Thermoplast, wie z.B. PC-ABS, und/oder aus einem elastischen Material, insbesondere einem thermoplastischen Elastomer, Silikon oder Gummi, bestehen. So kann beispielsweise eine Zweikomponenten-Abdeckkappe derart ausgebildet sein, dass ihr Deckel aus einem starren Material und ihr zum Auf- und Zuklappen des Deckels benötigtes Scharnier aus einem elastischen Material gefertigt ist. Auf diese Weise ergibt sich einerseits eine gute Dichtfunktion der Abdeckkappe und andererseits eine hohe Langlebigkeit. Zudem kann dadurch ein Austausch einer beschädigten Abdeckkappe erleichtert werden.

In einer alternativen Ausgestaltung ist vorgesehen, dass die Anschlussbuchse derart um eine Drehachse verdrehbar ist, dass sie im verschlossenen Zustand bündig mit den Oberflächen abschließt. Dadurch kann auf eine separate Abdecckappe verzichtet werden. Allerdings erfordert eine derartig ausgestaltete Anschlussbuchse einen größeren Bauraum und ggf. aufwändiger hergestellte Kontakte.

Die Anschlussbuchse weist eine elektromechanische Schnittstelle auf, die gegenüber einer sie umgebenden, flächigen Vertiefung erhabenen ist. Somit können Fluide nicht direkt in die elektromechanische Schnittstelle laufen, um ein Korrodieren oder etwaige Kurzschlüsse der elektrischen Kontakte der elektromechanische Schnittstelle zu vermeiden. Mit besonderem Vorteil weist das Gehäuse der Anzeigeeinheit einen Abflusskanal auf, der mit der Vertiefung verbunden ist. Dadurch können die Fluide über das Gehäuse in das Oberrohr bzw. durch das Oberrohr hindurch abgeführt werden. Mit besonderem Vorteil ist die Anschlussbuchse als eine USB-C-Buchse ausgebildet. Es sind jedoch auch andere Buchsen zur Daten- und/oder Energieübertragung, wie z.B. USB-A, Mikro-USB, Rundbuchsen oder dergleichen denkbar.

Eine weitere Aufgabe der Erfindung kann darin gesehen werden, eine gegenüber dem Stand der Technik verbesserte Anzeigeeinheit im Rahmen eines elektromotorisch angetriebenen Fahrzeugs bereitzustellen, die in der Lage ist, den Fahrer des Fahrzeugs über etwaige Statusänderungen, Warnungen und/oder Alarmierungen langfristig sicher akustisch zu informieren.

Zur Lösung der Aufgabe ist vorgesehen, dass die Anzeigeeinheit einen Schallwandler aufweist, der derart in der Anzeigeeinheit angeordnet ist, dass er vor Witterungseinflüssen geschützt ist. Mit besonderem Vorteil kann dadurch eine akustische Information des Fahrers über einen langen Zeitraum unabhängig von äußeren Einflüssen sichergestellt werden.

In einer Weiterbildung ist vorgesehen, dass der Schallwandler in einem Abstand von ca. 70 cm einen Schallpegel von mindestens 2,7 Sone erzeugen kann. Auf diese Weise ist ein ausreichend lautes Signal am Ohr des Fahrers auch während der Fahrt gewährleistet.

In einer Weiterbildung ist vorgesehen, dass der Schallwandler als ein Piezo-Lautsprecher ausgebildet ist, der derart auf einer Unterseite eines Displays, insbesondere eines Touchdisplays, der Anzeigeeinheit angeordnet ist, dass er das Display zur Schallerzeugung anregt. Mit besonderem Vorteil kann der Schallwandler so zum einen sehr flach ausgebildet sein und zum anderen aufgrund des zum Fahrer ausgerichteten Displays ausreichend Schallenergie übertragen. Zudem kann das Display mittels eines geschlossenen Gehäuses gegenüber Wetter- und anderen Umwelteinflüssen vollständig abgedichtet sein.

In einer alternativen Ausgestaltung weist die Anzeigeeinheit ein Gehäuse auf, wobei der Schallwandler derart auf einer Leiterplatte innerhalb des Gehäuses angeordnet ist, dass der von ihm erzeugte Schall durch eine abseits der Oberfläche des Rahmens angeordnete Öffnung des Gehäuses austritt. Der Schallwandler kann vorzugsweise als ein dynamischer Lautsprecher bzw. ein Buzzer ausgebildet sein.

Innerhalb des Gehäuses ist ergänzend eine Akustikkammer zur Führung des Schalls vom Schallwandler zur Öffnung gebildet. Die Akustikkammer kann dabei als ein den Schallwandler umgebendes Subgehäuse ausgebildet sein, das vorzugsweise aus einem Elastomer besteht. Auf diese Weise werden die Schallwellen gebündelt und nach unten in das Oberrohr abgeleitet. Durch die nach unten offene Ausgestaltung des Gehäuses ist die Öffnung vor Witterungs- und Umwelteinflüssen geschützt. Gleichzeitig kann ein ausreichender Schallpegel für den Fahrer des elektromotorisch angetriebenen Fahrzeugs erzeugt werden. Zudem wird der Einbau innerhalb des Gehäuses erleichtert, wenn eine Haupterstreckungsebene der Leiterplatte parallel zu dem Display ausgerichtet ist.

Im montierten Zustand ist die Zwischenschicht der Anzeigeeinheit verformt, insbesondere gestaucht, ausgebildet, um einen möglichst dichten Sitz der Anzeigeeinheit im Rahmen zu gewährleisten. Mit besonderem Vorteil ermöglicht die Zwischenschicht auch eine verbesserte Schallableitung, da zum Beispiel ungünstige Resonanzen zwischen der Anzeigeeinheit und dem Rahmen vermieden werden können.

In einer weiteren Ausgestaltungsform weist das elektromotorisch angetriebene Fahrzeug einen Lenker und einen Sattel auf, wobei zwischen dem Lenker und dem Sattel ein Oberrohr des Rahmens angeordnet ist, in dessen Oberfläche die Anzeigeeinheit, insbesondere bündig, integriert ist. Das Oberrohr des Rahmens eignet sich besonders vorteilhaft für die Integration der Anzeigeeinheit, weil der Fahrer so stets einen guten und geradeaus gerichteten Blick auf das Display der Anzeigeeinheit hat. Durch die für gewöhnlich geneigte Anordnung des Oberrohrs im Rahmen können zudem Fluide und anderer Schmutz weniger gut an der Oberfläche der Anzeigeeinheit anhaften.

### Ausführungsbeispiele

### Zeichnung

Die Erfindung wird im Folgenden anhand der Figuren 1 bis 9 beispielhaft erläutert, wobei gleiche Bezugszeichen in den Figuren auf gleiche Bestandteile mit einer gleichen Funktionsweise hindeuten.

Es zeigen:
- Fig. 1:: eine schematische Darstellung eines als ein zweirädriges Elektrofahrrad ausgebildeten elektromotorisch angetriebenes Fahrzeugs mit einem Rahmen,
- Fig. 2:: eine in ein Oberrohr des Rahmens integrierte Anzeigeeinheit in einem Schnitt entlang einer vertikal verlaufenden Längsebene des Oberrohrs,
- Fig. 3:: die Anzeigeeinheit mit einem Gehäuse in einer perspektivischen Ansicht von ihrer Unterseite,
- Fig. 4:: das Leergehäuse der Anzeigeeinheit in einer weiteren perspektivischen Ansicht,
- Fig. 5:: ein weiteres Ausführungsbeispiel der Anzeigeeinheit in einer perspektivischen Ansicht von oben,
- Fig. 6:: die Anzeigeeinheit in einem parallel zu den Oberflächen der Anzeigeeinheit bzw. des Oberrohrs verlaufenden Schnitt von unten,
- Fig. 7:: eine Anschlussbuchse der Anzeigeeinheit in einer perspektivischen Detailansicht,
- Fig. 8:: die Anzeigeeinheit in einem perspektivischen Schnitt senkrecht zu den Oberflächen der Anzeigeeinheit bzw. des Oberrohrs und
- Fig. 9:: die Anzeigeeinheit in einer weiteren perspektivischen Ansicht mit abgenommener Abdeckkappe.

### Beschreibung der Ausführungsbeispiele

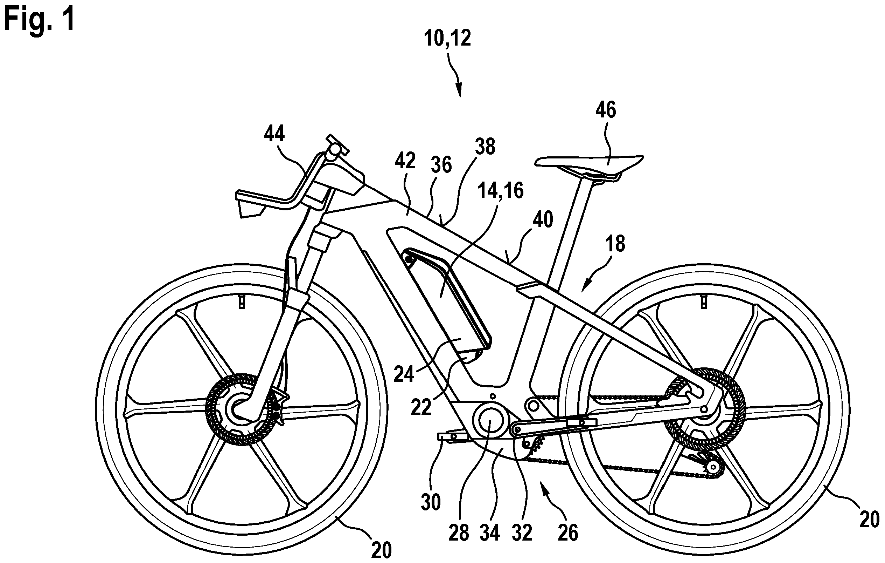

In Figur 1 ist eine schematische Darstellung eines elektromotorisch angetriebenes Fahrzeugs 10, das als ein zweirädriges Elektrofahrrad 12 ausgebildet ist, gezeigt. Das Elektrofahrrad 12 wird über eine als ein Wechselakkupack 14 ausgebildete Energiespeichereinheit 16 mit Energie versorgt und kann beispielsweise als ein Pedelec, als ein e-Bike oder dergleichen ausgebildet sein. Das Elektrofahrrad 12 weist ein Gehäuse in Form eines Rahmens 18 mit zwei im Rahmen 18 gelagerten Rädern 20 auf. Der Wechselakkupack 14 ist über eine am Rahmen 18 vorgesehene Verbindungsvorrichtung 22, die mit einer an einem Außengehäuse 24 des Wechselakkupacks 14 angebrachten Schnittstelle (nicht näher gezeigt) elektromechanisch zusammenwirkt, lösbar verbunden.

Das Elektrofahrrad 12 weist ferner eine Antriebseinheit 26 auf, die einen vorzugsweise als EC- bzw. BLDC-Motor ausgebildeten Elektromotor 28 in Form eines Mittelmotors umfasst. Statt eines Mittelmotors kann alternativ auch ein Nabenmotor in einem der Räder 20 zum Einsatz kommen. Auch die Antriebseinheit 26 wird über den Wechselakkupack 14 mit Energie versorgt und umfasst eine Elektronikeinheit (nicht dargestellt) zur Steuerung oder Regelung des Elektrofahrrads 12, insbesondere des Elektromotors 28. Die Elektronikeinheit ist ferner mit einer Sensoreinheit (ebenfalls nicht dargestellt) verbunden, die beispielhaft einen Drehmomentsensor, einen Drehratensensor, einen Bewegungssensor, einen Magnetsensor oder dergleichen zur Erfassung der Motordaten umfasst. Am Elektrofahrrad 12 ist weiterhin eine Tretkurbel 30 mit einer Tretkurbelwelle 32 vorgesehen, über die der Fahrer eine Tretbewegung zum Antrieb des hinteren Rads 20 im Sinne eines konventionellen Fahrradantriebs durchführen kann. Die Elektronikeinheit, die Antriebseinheit 26 mit dem Elektromotor 28 und die Tretkurbelwelle 32 sind in einem mit dem Rahmen 18 verbundenen Antriebsgehäuse 34 angeordnet.

Die Antriebsbewegung des Elektromotors 28 wird vorzugsweise über ein Getriebe (nicht dargestellt) auf die Tretkurbelwelle 32 übertragen, wobei die Intensität der Unterstützung durch die Antriebseinheit 26 mittels der Elektronikeinheit gesteuert oder geregelt wird. Die Elektronikeinheit ist dazu ausgebildet, die Antriebseinheit 26 derart anzusteuern, dass ein Fahrer des Elektrofahrrads 12 beim Treten unterstützt wird. Vorzugsweise ist die Elektronikeinheit durch den Fahrer bedienbar ausgebildet, sodass der Fahrer den Unterstützungsgrad einstellen kann.

Das Elektrofahrrad 12 umfasst eine Anzeigeeinheit 36, deren Oberfläche 38 derart bündig in eine Oberfläche 40 eines Oberrohrs 42 des Rahmens 18 integriert ist, dass die beiden Oberflächen 38, 40 eine Ebene bilden. Unter einer Ebene soll in diesem Zusammenhang verstanden werden, dass die beiden Oberflächen 38, 40 nur einen minimalen Höhenversatz von weniger als 0,1 mm aufweisen. Das Oberrohr 42 ist seinerseits zwischen einem Lenker 44 und einem Sattel 46 des Elektrofahrrads 12 angeordnet. Es sei weiterhin angemerkt, dass die Anzeigeeinheit 36 auch an anderen Positionen in den Rahmen 18 integriert sein kann. So weisen insbesondere Damenfahrräder kein explizites Ober- und Unterrohr auf, sondern vereinen diese beiden Rohre in einem gemeinsamen Rohr, in das dann die Anzeigeeinheit 36 integriert sein kann. Auch ist eine Integration in einen Lenkervorbau des Rahmens 18 denkbar.

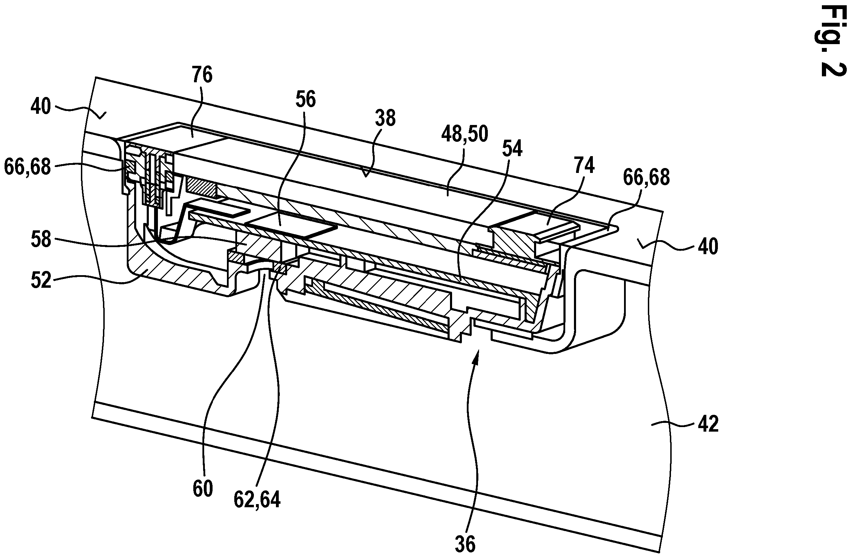

In Figur 2 ist die in das Oberrohr 42 integrierte Anzeigeeinheit 36 in einem Schnitt entlang einer vertikal verlaufenden Längsebene des Oberrohrs 42 bzw. des Rahmens 18 dargestellt. Die Anzeigeeinheit 36 umfasst ein als Touchdisplay 48 ausgebildetes Display 50, das zur Anzeige von Informationen und/oder zur Bedienung der Anzeigeeinheit 36 bzw. zur Steuerung der Antriebseinheit 26 und/oder des das Elektrofahrrad 12 antreibenden Rads 20 dient. Das Touchdisplay 48 bildet seinerseits die Oberfläche 38 der Anzeigeeinheit 36, die bündig mit der Oberfläche 40 des Oberrohrs 42 abschließt. Mit besonderem Vorteil kann der Fahrer somit aktiv mit dem Elektrofahrrad 12 per Fingersteuerung interagieren, um beispielsweise ein Schaltverhalten einer Gangschaltung, eine Beleuchtungssituation einer Beleuchtung des Elektrofahrrads 12, eine Energiesteuerung für den Wechselakkupack 14 des Elektrofahrrads 12, eine Fahrzeugnavigation oder dergleichen zu beeinflussen, während das Touchdisplay 48 aufgrund seiner Neigung und der mit dem Oberrohr 42 gebildeten Ebene weitestgehend unempfindlich gegenüber Wasser, Staub und Schmutz ist. Die Anzeigeeinheit 36 ist mit der Antriebseinheit 26 zum Austausch von Informationen und Befehlen verbunden. Zudem besteht neben der zuvor erwähnten Sensoreinheit für den Elektromotor 28 eine Verbindung zu diversen Sensoreinheiten, die unterschiedliche Daten des Elektrofahrrads 12 (z.B. Geschwindigkeit, Beschleunigung, Steigung, Kadenz, etc.), der Umgebung (z.B. Luftdruck, Helligkeit, etc.) und/oder des Fahrers (z.B. Herzfrequenz, Blutsauerstoffanteil, etc.) erfassen können. Die Verbindung kann per Kabel oder kabellos, z.B. per Bluetooth, ausgebildet sein. Auf diese Weise kann das Touchdisplay 48 beispielsweise eine ermittelte Geschwindigkeit, einen eingestellten Unterstützungsgrad des Elektromotors 28, eine Routeninformation einer im Anzeigeeinheit 36 integrierten Navigationseinheit, einen Ladezustand des Wechselakkupacks 14 oder dergleichen anzeigen.

Die Anzeigeeinheit 36 weist ein Gehäuse 52 auf, in dem neben dem Touchdisplay 48 unter anderem eine Leiterplatte 54 angeordnet ist. Die Leiterplatte 54 ist derart im Gehäuse 52 angeordnet, dass eine Haupterstreckungsebene der Leiterplatte 54 parallel zu dem Touchdisplay 48 ausgerichtet ist. Sie trägt unterschiedliche Halbleiterbauelemente einer Elektronikeinheit 56, wie beispielsweise Mikroprozessoren, Widerstände, Kondensatoren, Transistoren, Dioden, Drosseln, Sensoren etc., auf die hier jedoch nicht weiter eingegangen werden soll, da der Aufbau der Elektronikeinheit 50 nicht Gegenstand der Erfindung sein soll. Auf der der Elektronikeinheit 56 und dem Touchdisplay 48 gegenüberliegende Seite der Leiterplatte 54 ist ein Schallwandler 58 derart angeordnet, dass der von ihm erzeugte Schall durch eine abseits der Oberfläche 40 des Oberrohrs 42 angeordnete Öffnung 60 des Gehäuses 52 austritt. Der Schallwandler 58 ist beispielsweise als ein dynamischer Lautsprecher, ein Buzzer oder dergleichen ausgebildet. Innerhalb des Gehäuses 52 umgibt ein Subgehäuse 62 den Schallwandler 58 derart, dass es eine Akustikkammer 64 zur Führung des Schalls vom Schallwandler 58 zur Öffnung 60 bildet. Das Subgehäuse 62 ist zur besseren Schallabdichtung zwischen der Leiterplatte 54 und dem Gehäuse 52 vorzugsweise aus einem Elastomer gebildet. Es ist jedoch auch denkbar, dass das Subgehäuse 62 aus einem Thermoplast bzw. aus demselben Material wie das Gehäuse 52 besteht. Das Subgehäuse 62 ermöglicht so durch eine entsprechende Anpassung die Verwendung unterschiedlicher Schallwandler 58 innerhalb des Gehäuses 52. Durch das Subgehäuse 52 werden einerseits die Schallwellen gebündelt und nach unten in das Oberrohr 42 abgeleitet, während die Öffnung 60 und demzufolge auch die Leiterplatte 54 samt Schallwandler 58 und Elektronikeinheit 56 anderseits durch die nach unten offene Ausgestaltung des Gehäuses 52 vor Witterungs- und Umwelteinflüssen geschützt sind. Gleichzeitig kann ein ausreichender Schallpegel von mindestens 2,7 Sone am Ohr des Fahrers, also in ca. 70 cm Entfernung von der Oberfläche 40 des Oberrohrs 42 bzw. des Rahmens 18, erzeugt werden.

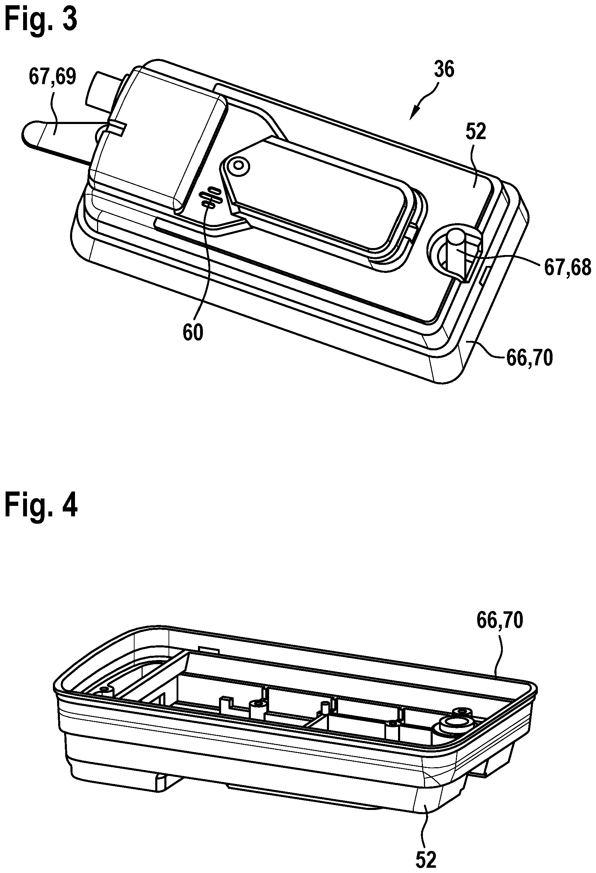

Figur 3 zeigt die Anzeigeeinheit 36 mit dem Gehäuse 52 in einer perspektivischen Ansicht von ihrer Unterseite. Gut zu erkennen ist die Öffnung 60 für den Schallaustritt. Weiterhin ist das Gehäuse 52 stoffschlüssig mit einer aus einem elastischen Material, insbesondere einem thermoplastischen Elastomer oder Silikon, bestehende Zwischenschicht 66 verbunden. Die Zwischenschicht 66 ist derart zwischen den Oberflächen 38, 40 des Oberrohrs 42 und des Anzeigeeinheit 36 angeordnet, dass sie im montierten Zustand der Anzeigeeinheit 36 eine Ebene der beiden Oberflächen 38, 40 bildet (vgl. auch Figur 2). Durch die stoffschlüssige Verbindung der Zwischenschicht 66 mit dem Gehäuse 52 ergibt sich eine besonders einfache Montage der Anzeigeeinheit 36 in das Oberrohr 42, da die Anzeigeeinheit 36 somit als ein vorgefertigtes Modul ausgebildet ist. Zu diesem Zweck weist die Anzeigeeinheit 36 Befestigungsmittel 67 in Form eines Schraubdoms 68 und eines als eine Blattfeder ausgebildeten Toleranzausgleichelements 69 zu ihrer Befestigung im Oberrohr 40 des Rahmens 18 auf.

Zur weiteren Veranschaulichung ist in Figur 4 das Leergehäuse 52 des Anzeigeeinheit 36 mit der Zwischenschicht 66 in einer weiteren perspektivischen Ansicht gezeigt. Die Zwischenschicht 66 vereinfacht die bündige Integration des Touchdisplays 48 in das Oberrohr 42, da dadurch etwaige Fertigungs- und Montagetoleranzen ausgeglichen werden können. Zudem lassen sich durch sie etwaige Relativbewegungen zwischen der Anzeigeeinheit 36 und dem Oberrohr 42 kompensieren, die beispielsweise infolge von Verformungen des Rahmens 18 bei Sprüngen, Stürzen oder starken Richtungsänderungen mit dem Elektrofahrrad 12 entstehen können. Um das Eindringen von Fluiden in das Oberrohr 42 beispielsweise während einer Reinigung des Elektrofahrrads 12 oder bei einem Starkregen zu vermeiden, ist die Zwischenschicht 66 als eine Dichtung 70 zwischen dem Oberrohr 42 und der Anzeigeeinheit 36 ausgebildet.

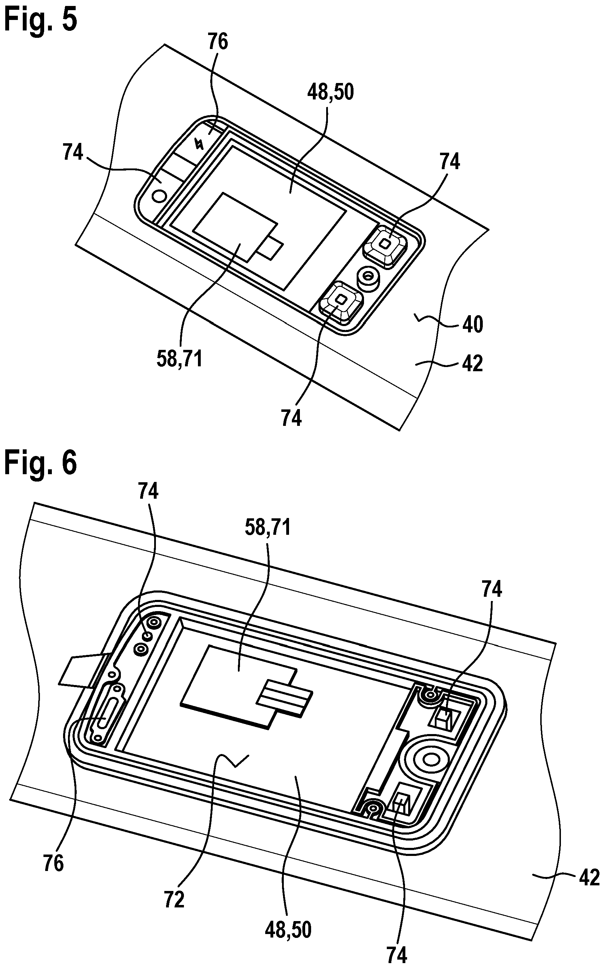

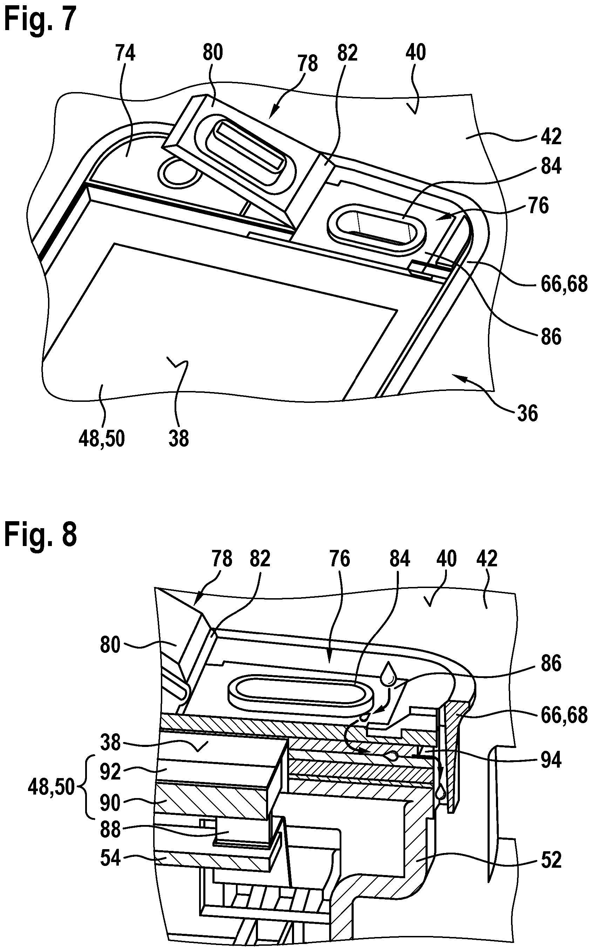

In den Figuren 5 und 6 ist ein weiteres Ausführungsbeispiel des Anzeigeeinheit 36 in einer perspektivischen Ansicht von oben (Figur 5) und in einem parallel zu den Oberflächen 38, 40 des Anzeigeeinheit 38 bzw. des Oberrohrs 42 verlaufenden Schnitt von unten (Figur 6) dargestellt. Statt als dynamischer Lautsprecher oder Buzzer ist der Schallwandler 58 als ein sehr flach bauender Piezo-Lautsprecher 71, beispielsweise als ein so genannter PiezoListen Lautsprecher von TDK, ausgebildet, der derart auf einer Unterseite 72 des Touchdisplays 48 angeordnet ist, dass er das Touchdisplay 48 zur Schallerzeugung anregt. Somit kann durch das zum Fahrer ausgerichtete Touchdisplay 48 ausreichend Schallenergie, insbesondere die erwähnten 2,7 Sone im Abstand von ca. 70 cm, zum Fahrer übertragen werden. Im Unterschied zum vorherigen Ausführungsbeispiel kann dadurch das Gehäuse 52 vollständig geschlossen sein, um die Anzeigeeinheit 36 gegenüber Wetter- und anderen Umwelteinflüssen zu schützen. Es sei noch angemerkt, dass das Touchdisplay 48 in Figur 4 zur besseren Veranschaulichung ohne Deckglas (vgl. Figur 8) dargestellt ist. Dadurch erscheint das Touchdisplay 48 hier nicht bündig mit der Oberfläche 40 des Oberrohrs 42 zu sein. De facto ist es dies jedoch gemäß der vorherigen Ausführungen zu den Figuren 1 bis 3. Zudem weist die Anzeigeeinheit 36 noch einige bündig in die Oberfläche 38 eingelassene Tasten 74 zur alternativen und/oder ergänzenden haptischen Steuerung auf. So kann der Anzeigeeinheit 36 zum Beispiel über eine der Tasten ein- und ausgeschaltet werden, während eine Taste 74 zum Umschalten der Ansichten des Touchdisplays 48 und eine weitere Taste 74 zur Änderung von Eingabewerten dient. In diesem Zusammenhang ist es auch möglich, dass das Display 50 nicht als Touchdisplay ausgebildet ist, sondern zur reinen Informationsanzeige dient. In die Oberflächen 38, 40 der Anzeigeeinheit 36 bzw. des Oberrohrs 42 ist ferner eine Anschlussbuchse 76 zur Daten- und/oder Energieübertragung mit einem externen Gerät, wie beispielsweise einem Smartphone oder dergleichen, vertieft eingelassen, auf die im Folgenden näher eingegangen werden soll.

Figur 7 zeigt die Anschlussbuchse 76 der Anzeigeeinheit 36 in einer Detailansicht. Die Anschlussbuchse 76 ist derart mit einer Abdeckkappe 78 verschließbar, dass die Abdeckkappe 78 im geschlossenen Zustand bündig mit den Oberflächen 38, 40 der Anzeigeeinheit 36 bzw. des Oberrohrs 42 abschließt, so dass die Anschlussbuchse 76 vor etwaigen Witterungs- und anderen Umwelteinflüssen geschützt ist. Die Abdeckkappe 78 ist als eine Zweikomponenten-Abdeckkappe 78 mit einem Deckel 80 und einem Scharnier 82 ausgebildet. Der Deckel 80 besteht dabei aus einem starren Material, insbesondere einem Thermoplast, wie z.B. PC-ABS, während das Scharnier 82 aus einem elastischen Material, insbesondere einem thermoplastischen Elastomer, Silikon oder Gummi, besteht. Auf diese Weise ergibt sich einerseits eine gute Dichtfunktion der Abdeckkappe 78 und andererseits eine hohe Langlebigkeit.

Die typischerweise als USB-C-Buchse ausgebildete Anschlussbuchse 78 weist eine elektromechanische Schnittstelle 84 auf, die gegenüber einer sie umgebenden, flächigen Vertiefung 86 erhabenen ist. Die elektromechanische Schnittstelle 84 dient zur Aufnahme eines entsprechenden USB-C-Steckers. Durch die gegenüber der Vertiefung 86 erhabene Bauweise können keine Fluide direkt in die elektromechanische Schnittstelle 84 laufen, was ein Korrodieren oder etwaige Kurzschlüsse der elektrischen Kontakte der elektromechanische Schnittstelle 84 verhindert bzw. die Gefahr deutlich reduziert.

Figur 8 zeigt die Anzeigeeinheit 36 in einem perspektivischen Schnitt senkrecht zu den Oberflächen 38, 40 des Touchdisplays 48 bzw. des Oberrohrs 42. Dargestellt ist unter anderem das mit der Leiterplatte 54 über einen Verbinder 88 elektrisch verbundene Touchdisplay 48, das hier stark vereinfacht aus den Layern 90 zur Anzeige und zur kapazitiven Berührungserkennung sowie dem in Figur 5 nicht gezeigten und die Oberfläche 38 bildenden Deckglas 92 besteht.

Das Gehäuse 52 der Anzeigeeinheit 36 weist einen Abflusskanal 94 auf, der mit der Vertiefung 86 der Anschlussbuchse 76 derart verbunden ist, dass Fluide, wie z.B. Wasser, über das Gehäuse 52 in das Oberrohr 42 bzw. durch das Oberrohr 42 hindurch abgeführt werden können. Statt einer USB-C-Buchse sind auch andere Buchsen zur Daten- und/oder Energieübertragung mit dem externen Gerät, wie z.B. USB-A, Mikro-USB, Rundbuchsen oder dergleichen, denkbar.

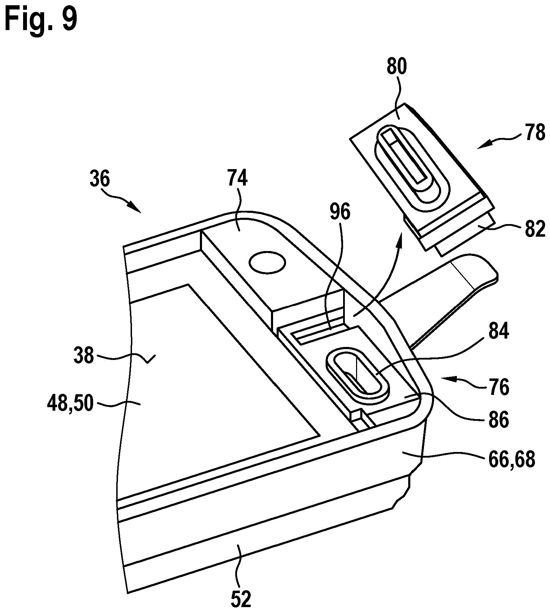

In Figur 9 ist die Anzeigeeinheit 36 in einer weiteren perspektivischen Ansicht mit abgenommener Abdeckkappe 78 gezeigt. Um einen Austausch der Abdeckkappe 78 zu erleichtern, ist ihr Scharnier 82 in eine entsprechende Haltenut 96 aufgenommen. Darin kann das Scharnier 82 dann werkzeuglos seitlich ein- und ausgeführt werden. In einer alternativen Ausgestaltung kann auch vorgesehen sein, dass die Anschlussbuchse 76 derart um eine Drehachse verdrehbar ist, dass sie im verschlossenen Zustand bündig mit den Oberflächen 38, 42 abschließt. Dadurch kann auf die Abdeckkappe 78 verzichtet werden. Allerdings erfordert eine derartig ausgestaltete Anschlussbuchse 76 einen größeren Bauraum und ggf. aufwändiger hergestellte Kontakte.

Es sei abschließend noch darauf hingewiesen, dass die gezeigten Ausführungsbeispiele weder auf die Figuren 1 bis 9 noch auf die gezeigten Formen, Mengen und Größenverhältnisse der einzelnen Elemente beschränkt sind. Diese sind lediglich exemplarisch zu verstehen.

## Patentansprüche

1. Elektromotorisch angetriebenes Fahrzeug (10), insbesondere elektromotorisch angetriebenes Ein- oder Zweirad (12), mit einem Rahmen (18), wobei in eine Oberfläche (40) des Rahmens (18) eine Anzeigeeinheit (36) zur Interaktion eines Fahrers mit dem elektromotorisch angetriebenen Fahrzeug (10) vorgesehen ist, **dadurch gekennzeichnet, dass** eine Oberfläche (38) der Anzeigeeinheit (36) derart bündig in die Oberfläche (40) des Rahmens (18) integriert ist, dass mittels einer zwischen der Anzeigeeinheit (36) und dem Rahmen (18) angeordneten Zwischenschicht (66) eine Ebene gebildet ist.

2. Elektromotorisch angetriebenes Fahrzeug (10) nach Anspruch 1, **dadurch gekennzeichnet, dass** die Zwischenschicht (66) stoffschlüssig mit einem Gehäuse (52) der Anzeigeeinheit (36) verbunden ist.

3. Elektromotorisch angetriebenes Fahrzeug (10) nach einem der vorhergehenden Ansprüche, **dadurch gekennzeichnet, dass** die Zwischenschicht (66) aus einem elastischen Material, insbesondere einem thermoplastischen Elastomer oder Silikon, besteht.

4. Elektromotorisch angetriebenes Fahrzeug (10) nach einem der vorhergehenden Ansprüche 2 oder 3, **dadurch gekennzeichnet, dass** die Zwischenschicht (66) elastischer ausgebildet ist als das Gehäuse (52).

5. Elektromotorisch angetriebenes Fahrzeug (10) nach einem der vorherigen Ansprüche, **dadurch gekennzeichnet, dass** die Zwischenschicht (66) im montierten Zustand der Anzeigeeinheit (36) verformt, insbesondere gestaucht, ausgebildet ist.

6. Elektromotorisch angetriebenes Fahrzeug (10) nach einem der vorherigen Ansprüche, **dadurch gekennzeichnet, dass** die Zwischenschicht (66) als eine Dichtung (68) gegen das Eindringen von Fluiden zwischen dem Rahmen (18) und der Anzeigeeinheit (36) ausgebildet ist.

7. Elektromotorisch angetriebenes Fahrzeug (10) nach einem der vorherigen Ansprüche, **dadurch gekennzeichnet, dass** die Anzeigeeinheit (36) zumindest ein Befestigungsmittel (67), insbesondere eine Schraube oder ein Schraubdom (68) und ein Toleranzausgleichelement (69), insbesondere eine Blattfeder, zur Befestigung im Rahmen (18) aufweist.

8. Elektromotorisch angetriebenes Fahrzeug (10) nach einem der vorhergehenden Ansprüche, **dadurch gekennzeichnet, dass** das Fahrzeug (10) einen Lenker (44) und einen Sattel (46) aufweist, wobei zwischen dem Lenker (44) und dem Sattel (46) ein Oberrohr (42) des Rahmens (18) angeordnet ist, in dessen Oberfläche (40) die Anzeigeeinheit (36) bündig integriert ist.

9. Anzeigeeinheit (36) mit einem Display (50), insbesondere einem Touchdisplay (48), und einem Gehäuse (52) für ein elektromotorisch angetriebenes Fahrzeug (10), **dadurch gekennzeichnet, dass** das Gehäuse (52) und das Display (50) stoffschlüssig mit einer Zwischenschicht (66) zur bündigen Integration in einen Rahmen (18) des Fahrzeugs (10) verbunden ist.
